# EUROPÄISCHE PATENTSCHRIFT

(11) **EP 1 623 364 B1**
(45) Veröffentlichungstag und Bekanntmachung des Hinweises auf die Patenterteilung: **30.08.2006**
(21) Anmeldenummer: 04722833.3
(22) Anmeldetag: 24.03.2004
(51) Int. Cl.: G06K 13/08, G06K 7/00, G07C 7/00

(54) **KARTENAUFNAHMEVORRICHTUNG**
CARD HOUSING DEVICE
DISPOSITIF DE RECEPTION DE CARTE

(30) Priorität: 12.05.2003 DE 10321242
(43) Veröffentlichungstag der Anmeldung: 08.02.2006
(73) Patentinhaber: SIEMENS AKTIENGESELLSCHAFT, 80333 München (DE)
(72) Erfinder: HUG, Klaus, 78727 Oberndorf (DE); WAHLER, Torsten, 78073 Bad Dürrheim (DE)
(86) Internationale Anmeldenummer: PCT/EP2004/003137
(87) Internationale Veröffentlichungsnummer: WO 2004/100047

(56) Entgegenhaltungen:
- EP-A- 0 363 992
- DE-A1- 3 518 247
- DE-A1- 4 315 746
- DE-A1- 4 402 229
- DE-U1- 20 215 030
- FR-A- 2 801 393

## Beschreibung

Die Erfindung betrifft eine Kartenaufnahmevorrichtung, insbesondere für einen Fahrtenschreiber in einem Kraftfahrzeug in Flachbauweise, welcher eine Karte in einer Bewegungsebene vollständig einzieht, mit einer länglichen Aufnahmeöffnung, durch welche die Karte in die Kartenaufnahmevorrichtung gelangt und mit einem Verschluss, der ein Verschlusselement aufweist, welches sich in Längsrichtung der Aufnahmeöffnung erstreckt und in der Geschlossen-Stellung des Verschlusses die Aufnahmeöffnung versperrt, wobei das Verschlusselement im Rahmen des für die Aufnahme der Karte erforderlichen Hubes in normale Richtung der Bewegungsebene bewegbar ist.

Der Schwerpunkt der Anwendung der erfindungsgemäßen Vorrichtung liegt im Bereich von Fahrtenschreibern oder bzw. Vorrichtungen zur Erfassung der Arbeitszeiten und Ruhezeiten von Nutzfahrzeugfahrern. Andere Anwendungen sind jedoch ebenfalls denkbar, z. B. im Bereich des Bank- und Zahlungswesens oder bei Schließsystemen. Vorteilhafte Anwendung findet die Erfindung in Kombination mit allen Arten von kartenförmigen Datenträgern. Aufgrund der hohen wirtschaftlichen und rechtlichen Bedeutung der zu erfassenden Daten bei Fahrtenschreibern, müssen die Aufzeichnungen zuverlässig gegen Manipulationen gesichert werden. Die Sicherungsmaßnahmen betreffen sowohl die Datenerfassung und Datenübertragung als auch die Übertragung und Speicherung der erfassten Daten im Speicher der Karte. Einschlägige Normen stellen strenge Anforderungen an den durch die Maßnahmen zu erreichenden Sicherheitsstandard. So ist vorgeschrieben, dass die Karte während der Lese- und Schreibvorgänge vollständig von der Kartenaufnahmevorrichtung aufgenommen ist und gegen die Umwelt mittels geeigneter Verschlussvorrichtungen isoliert ist. Die Verschlussvorrichtungen müssen in der Geschlossen-Stellung während der Lese- und Schreibvorgänge arretiert sein. Zusätzliche Schwierigkeiten ergeben sich aufgrund durch Verschmutzung bedingter Funktionsausfälle herkömmlicher Vorrichtungen, insbesondere durch Kontaktunterbrechungen oder sogar beim Einzug der Karte. Der Einzug und die exakte Positionierung der Karte an den Kontakten der Vorrichtung sind problematisch, weil die verschiedenen Karten im Verhältnis zu der erforderlichen Positionsgenauigkeit zu den Kontakten der Vorrichtung hohe Fertigungstoleranzen aufweisen. Da die Karten sich in der Wahrnehmung des Benutzers vor allem durch eine hohe Robustizität auszeichnen, werden diese in der Regel nicht mit der eigentlich erforderlichen Sorgfalt behandelt, so dass zusätzlich zu den durch die Fertigung bedingten Toleranzen Verformungen und Beschädigungen die Funktionsweise im Zusammenspiel mit den Kartenaufnahmevorrichtungen beeinträchtigen. Darüber hinaus stellen die Betriebsbedingungen in Kraftfahrzeugen erhöhte Anforderungen an die Funktionssicherheit aufgrund der starken Schwingungen und unzähligen Stöße sowie der weitreichenden Temperaturschwankungen. Die Realisierung der Manipulationssicherheit und der gewünschte Komfort bei der Handhabung machen einen vollautomatischen Karteneinzug erforderlich. Diesem Erfordernis nachzukommen stellt die Konstruktion jedoch vor große Schwierigkeiten, weil der zur Verfügung stehende Bauraum in einem Fahrtenschreiber in der Größe eines Autoradios nur etwa eine Höhe von 10 mm für den vollautomatischen Einzug bereitstellt. Eine wichtige Anwendung der Erfindung liegt im Bereich von Nutzfahrzeugen, insbesondere von Transportern von Gefahrgut, bei welchen einschlägige Schutzklassen zentrale Bedeutungen haben. So ist für viele Anwendungen ein Schutz gegen Staubablagerungen, vollständiger Schutz gegen Berührungen unter Spannung stehender oder innerer bewegter Teile, ein Schutz gegen das Eindringen von Staub, ein Schutz gegen das Eindringen von Wasser, welches aus allen Richtungen gegen die Vorrichtung spritzt, zwingend vorgeschrieben. Diese Randbedingungen stellen besondere Anforderungen an einen Verschluss der Aufnahmeöffnung einer Kartenaufnahmevorrichtung.

Aus der europäischen Patentanmeldung EP 1 017 013 A3 ist bereits eine Schließvorrichtung für ein gattungsnahes Gerät bekannt, bei welcher eine segmentierte Trommel die Öffnung versperrt oder freigibt, wobei die Trommel mittels eines geeigneten Getriebes gesteuert und angetrieben ist. Aufgrund des hohen konstruktiven und fertigungstechnischen Aufwandes ist diese Lösung nicht serientauglich. Aus der europäischen Patentschrift EP 0 342 407 B1 ist bereits eine Vorrichtung bekannt, bei welcher ein Verschluss in gattungsgemäßer Weise bewegbar ist, wobei die vorgeschlagene Lösung jedoch auch äußerst aufwendig ist.

Die DE 35 18 247 A1 beschreibt eine Ver- und Entriegelungseinrichtung für einen Kartenleser, bei der die Karte während des Lesebetriebs mittels eines Hakens arretiert wird. Der Haken ragt in den Aufnahmeschlitz hinein und versperrt diesen teilweise. Um die Arretierung zur Ausgabe der Karte wieder frei zu geben, muss der Haken mittels einer aufwändigen Hebelvorrichtung gedreht werden.

Die FR 2 801 393 A offenbart einen tragbaren Kartenleser, der insbesondere in ein Mobiltelefon integriert ist. Der Kartenleser ist so ausgestaltet, dass in Abwesenheit einer Karte kein Staub eindringen kann. Anstelle eines offenen Einführschlitzes für die Karte ist stattdessen eine Klappe vorgesehen, die an einer Anschlagkante anliegt. Die Karte wird zwischen Klappe und Anschlagkante eingeschoben, verbleibt jedoch teilweise außerhalb des Kartenlesers.

Gattungsgemäße Geräte mit guillotineartiger Schließbewegung finden heutzutage in den meisten Bankautomaten Anwendung. Die Sicherheitsanforderungen sind bei diesen Vorrichtungen vergleichbar oder sogar noch höher, wobei eine Manipulation schon deshalb erschwert ist, weil diese Vorrichtungen stets überwacht werden. Auf einen Fahrtenschreiber kann die bekannte Technik jedoch nicht übertragen werden, weil sie den Bauraumanforderungen nicht genügt.

Ausgehend von den praktischen Anforderungen und den Problemen und Nachteilen des Standes der Technik hat es sich die Erfindung zur Aufgabe gemacht, eine Kartenaufnahmevorrichtung mittels eines Verschlusses einschlägigen Schutzklassen genügend zu verschließen bei gleichzeitig einem hohen Maß an Serientauglichkeit, geringen Fertigungskosten und zuverlässiger Funktionsweise.

Erfindungsgemäß wird die Aufgabe durch eine Kartenaufnahmevorrichtung nach Patentanspruch 1 gelöst. Der entscheidende Vorteil der Erfindung liegt in dem unvergleichlich niedrigen Aufwand der federnden Lagerung, welche zusätzliche mechanische, insbesondere getriebliche Bauteile weitestgehend überflüssig macht. Die bestechend einfache Lösung geht aufgrund ihres niedrigen konstruktiven Aufwandes mit einer hohen Zuverlässigkeit und geringen Fertigungskosten einher. Gleichzeit mit der Einsparung mechanisch aufwendiger Getriebekomponenten reduziert sich der Bauraum für den Verschluss erheblich, was insbesondere bei dem im Bereich von Kraftfahrzeug-Fahrtenschreibern vorgegebenen, dem Format eines Autoradios ähnlichen Bauraum, von höchstem Interesse ist. Ohne besonderen fertigungstechnischen Aufwand lässt sich eine hervorragende Betriebsweise des Verschlusses auf einer Bauhöhe von weniger als 10 mm realisieren.

Ohne aufwendige lineare Führung sondern mittels einer dem Verschlusselement entfernt angeordneten Drehachse kann eine zuverlässige Funktion kostengünstig bereitgestellt werden. Im Gegensatz zu einer linearen Führung des Verschlusselements neigt die Lagerung in einer Drehachse in keiner Weise zur Blockade, da die Drehmomente in der Lagerung mit zunehmender Entfernung von dem Verschlusselement anwachsen. Dennoch kann aufgrund des geringen Hubes des Verschlusselements und des sich daraus ergebenden geringen Rotationswinkels in der Drehachse eine weitestgehend ausschließlich translatorische Bewegung des Verschlusselementes sichergestellt werden, was ebenfalls dem zuverlässigen Verschließen der Aufnahmeöffnung zuträglich ist, da dem Verschluss oder den angrenzenden Anlageflächen anhaftende Verschmutzungen die Bewegung des Verschlusselements nicht zu behindern vermögen, wie beispielsweise bei einer verschwenkenden Klappe.

Die Blattfeder kann sich in einer Weiterbildung vorteilhaft im Wesentlichen in einer zu der Kartenebene parallelen Ebene erstrecken. Auf diese Weise bewegt sich das Verschlusselement bei der länglich ausgeführten Blattfeder im Wesentlichen translatorisch und senkrecht zu der Bewegungsebene, so dass ein vorteilhaftes guillotineartiges Verschließen stattfindet. Der entscheidende Vorteil liegt in der Einsparung sämtlicher getrieblicher Bauelemente, da die vorgeschlagene Blattfeder der Anordnung genau die benötigten Freiheitsgrade der Bewegung verleiht. Gleichzeitig wird die erfindungsgemäß vorteilhafte federnde Lagerung bereitgestellt.

Die höchste Stabilität wird erzielt, wenn das Verschlusselement einstückig mit der Blattfeder ausgebildet ist. Gleichzeitig reduziert sich kostengünstig die Anzahl der Bauteile. In diesem Sinne weitere Vorteile ergeben sich, wenn die Blattfeder Teil eines weitere Komponenten tragenden, gegebenenfalls zentralen Trägers ist.

Wie schon an der Blattfeder erläutert, ist es allgemein zweckmäßig, dass das Verschlusselement im Rahmen des für die Aufnahme der Chipkarte erforderlichen Hubes in Normalenrichtung der Bewegungsebene federnd gelagert ist. Die erfindungsgemäßen Vorteile ergeben sich aus der Kombination der federnden Lagerung in Normalenrichtung der Bewegungsebene mit einer im Wesentlichen translatorisch in Normalenrichtung der Bewegungsebene orientierten Beweglichkeit des Verschlusselementes. Es sei darauf hingewiesen, dass, Rotationsbewegungen um kleine Winkel den erfindungsgemäßen Erfolg nicht schmälern, solange es sich bei der Bewegung des Verschlusselements im Wesentlichen um eine senkrecht zu der Bewegungsebene orientierte translatorische Bewegung handelt. Hierbei ist das Verhältnis des für die Aufnahme der Karte erforderlichen Hubes zu dem Abstand einer in Einwärtsrichtung des Verschlusselementes befindlichen Drehachse der Bewegung des Verschlusselementes von Bedeutung. Vorteilhaft ist diese Drehachse in Einwärtsrichtung mindestens um das Zehnfache des üblichen Hubes des Verschlusselements von dem Verschlusselement entfernt angeordnet. Gleiches gilt für die Befestigung eines Endes der mit dem Verschlusselement in Verbindung stehenden Blattfeder.

Damit der Benutzer den Verschluss durch schlichten Druck mittels der einzuführenden Karte öffnen kann, ist es zweckmäßig, wenn das Verschlusselement eingangsseitig eine sich in Längsrichtung der Aufnahmeöffnung erstreckende außen befindliche Einlaufschräge für die einzuführende Karte aufweist. In gleicher Weise ist es für die Ausgabe einer Karte aus dem erfindungsgemäßen Gerät zweckmäßig, wenn das Verschlusselement eine sich in Längsrichtung der Aufnahmeöffnung erstreckende innen befindliche Einlaufschräge für die auszuschiebende Karte aufweist.

Da insbesondere im Bereich von Nutzfahrzeugen von einer pfleglichen Behandlung der aufzunehmenden Karten nicht ausgegangen werden kann, ist es zweckmäßig, wenn das Verschlusselement in der Geschlossen-Stellung elastisch vorgespannt an einer Gegenanlage liegt, die Karte während der Einwärtsbewegung in die Kartenaufnahmevorrichtung zwischen der Gegenanlage und dem Verschlusselement angeordnet ist, mit einer ersten Flachseite dem Verschlusselement zugewandt ist und mit einer zweiten Flachseite der Gegenanlage zugewandt ist und das Verschlusselement gegen die dem Verschlusselement zugewandte Flachseite der Karte verspannt ist. Auf diese Weise werden Verschmutzungen während der Einzugsbewegung mittels des Verschlusselementes von der Karte abgestriffen. Der Abstreifvorgang kann sowohl durch das Verschlusselement als auch durch die Gegenanlage erfolgen. Da das Verschlusselement für diese Abstreiffunktion eine bevorzugte Eignung aufweist, ist es zweckmäßig, wenn die Kartenaufnahmevorrichtung einen Kontaktsatz zum Kontaktieren der Karte aufweist, welcher auf der gleichen Seite der Bewegungsebene angeordnet ist, wie das Verschlusselement. Auf diese Weise wird die Karte besonders gründlich auf derjenigen Flachseite von Verschmutzungen befreit, welche in der Endposition mit den Kontakten des Kontaktsatzes in eine leitende Verbindung tritt. Bei Ausbildung der dem Verschlusselement gegenüberliegenden Dichtung mit Abstreifeignung ist auf Grund der Anpresskraft des Verschlusselementes eine Anordnung desselben auf der dem Kontaktsatz gegenüberliegenden Seite der Karte in gleicher Weise sinnvoll.

Damit insbesondere kein Spritzwasser in die Vorrichtung eindringen kann, ist es sinnvoll, wenn das Verschlusselement in der Geschlossen-Stellung an einer sich in Längsrichtung der Aufnahmeöffnung erstreckenden ersten Dichtung anliegt. Für weitergehenden Schutz vor Spritzwasser ist es zusätzlich zweckmäßig, die Aufnahmeöffnung in Querrichtung mit einer zweiten Dichtung zu versehen, an welcher das Verschlusselement in der Geschlossen-Stellung anliegt. Zusätzliche Einsparungen und eine Reduzierung der Bauteileanzahl ergeben sich, wenn die erste sich in Längsrichtung der Aufnahmeöffnung erstreckende Dichtung mit der zweiten sich in Querrichtung der Aufnahmeöffnung erstreckenden Dichtung ein Bauteil bilden, welches gegebenenfalls unter elastischer Verformung als Bandmaterial eingesetzt werden kann oder bereits eine entsprechende Verlaufskontur besitzen.

Für ein ansprechendes Äußeres ist es sinnvoll, die Vorrichtung mit einer Frontblende zu versehen, welche eine Rückseite und eine Sichtseite aufweist und im Bereich der Aufnahmeöffnung der Kartenaufnahmevorrichtung mit einer Ausnehmung versehen ist, die zumindest teilweise von einer dritten Dichtung auf der Rückseite umgeben ist, welche gegenüber der Vorderseite der Kartenaufnahmevorrichtung im Bereich der Aufnahmeöffnung dichtet, so dass weder Spritzwasser noch Staub eindringen kann. Zweckmäßig bildet diese dritte Dichtung ein Bauteil mit der schon gegenüber dem Verschlusselement dichtenden Dichtung, so dass die Kartenaufnahmevorrichtung eine Frontblende mit einer Rückseite, einer Sichtseite und mit einer Ausnehmung im Bereich der Aufnahmeöffnung die Karte aufweist, der Querschnitt der Dichtung einen sich in Längsrichtung erstreckenden härteren Bereich aufweist, an welchem das Verschlusselement in der Geschlossen-Stellung anliegt und einen weicheren Bereich, welches an der Rückseite der Blende anliegt. Für den Fall, dass zwischen der eigentlichen Kartenaufnahmevorrichtung und der Frontblende Wasser trotz der Dichtung eindringen sollte, ist es sinnvoll, wenn die Blende unterhalb der Ausnehmung mindestens eine Entwässerungsöffnung aufweist.

Sowohl für ein selbsttätiges Öffnen des Verschlusselements aufgrund eines Drucks mittels der aufzunehmenden Karte als auch für eine bessere Dichtigkeit des Verschlusses ist es zweckmäßig, wenn das Verschlusselement einen zur Dichtung sich keilförmig verjüngenden oder spitz zulaufenden Querschnitt aufweist, so dass es in der Geschlossen-Stellung zu einem im Wesentlichen linienartigen Kontakt zwischen der Dichtung und dem Verschlusselement kommt.

Um einschlägigen Gesetzesnormen für Fahrtenschreiber Rechnung zu tragen, ist es sinnvoll, wenn die Kartenaufnahmevorrichtung eine Verriegelungseinheit aufweist, welche den Verschluss in der Geschlossen-Stellung verriegelt. Im Falle der federnden Lagerung des Verschlusselements mittels einer Blattfeder ist es von besonderem Vorteil, wenn das Verriegelungselement der Verriegelungseinheit in der Geschlossen-Stellung die Blattfeder blockiert. Die Vorteile der Erfindung kommen in vollem Ausmaß zum Tragen, wenn die Karte in die Kartenaufnahmevorrichtung automatisch einziehbar ist oder ausgebbar ist.

Im Folgenden ist die Erfindung zur Verdeutlichung unter Bezugnahme auf Zeichnungen anhand eines speziellen Ausführungsbeispiels näher erläutert. Es zeigen:
- Fig. 1:: eine Draufsicht auf einen erfindungsgemäßen Verschluss als Bestandteil eines Trägers;
- Fig. 2:: einen Längsschnitt durch ein Verschlusselement eines erfindungsgemäßen Verschlusses mit angeformter Blattfeder;
- Fig. 3:: eine perspektivische Darstellung zweier erfindungsgemäßer Verschlüsse angeordnet auf einem gemeinsamen Träger;
- Fig. 4:: eine Draufsicht auf einen erfindungsgemäßen Verschluss mit einer Verriegelungseinheit in nicht verriegelter Stellung;
- Fig. 5:: eine Draufsicht auf einen erfindungsgemäßen Verschluss mit einer Verriegelungseinheit in verriegelter Stellung;
- Fig. 6:: eine Draufsicht auf eine erfindungsgemäße Anordnung von Dichtungen an einem erfindungsgemäßen Verschluss;
- Fig. 7:: eine Frontansicht auf die Dichtungsanordnung der Fig. 6;
- Fig. 8:: ein Schnitt durch eine erfindungsgemäße Anordnung einer Dichtung gemäß dem in Fig. 7 dargestellten Schnitt A-A;
- Fig. 9:: eine Unteransicht auf ein erfindungsgemäßes Verschlusselement in Zusammenstellung mit einer erfindungsgemäßen Dichtungsanordnung;
- Fig. 10:: eine Detaildarstellung gemäß dem in Fig. 9 ausgewiesenen Detail Z;
- Fig. 11:: ein Längsschnitt durch einen erfindungsgemäßen Verschluss in Zusammenstellung mit einer Frontblende einer Kartenaufnahmevorrichtung;
- Fig. 12:: eine Detaildarstellung gemäß dem in Fig. 11 ausgewiesenen Detail Z.

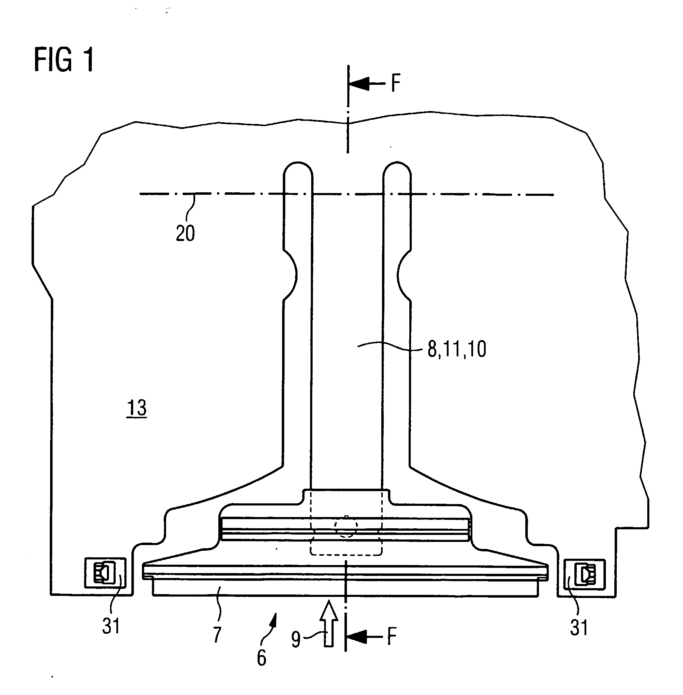

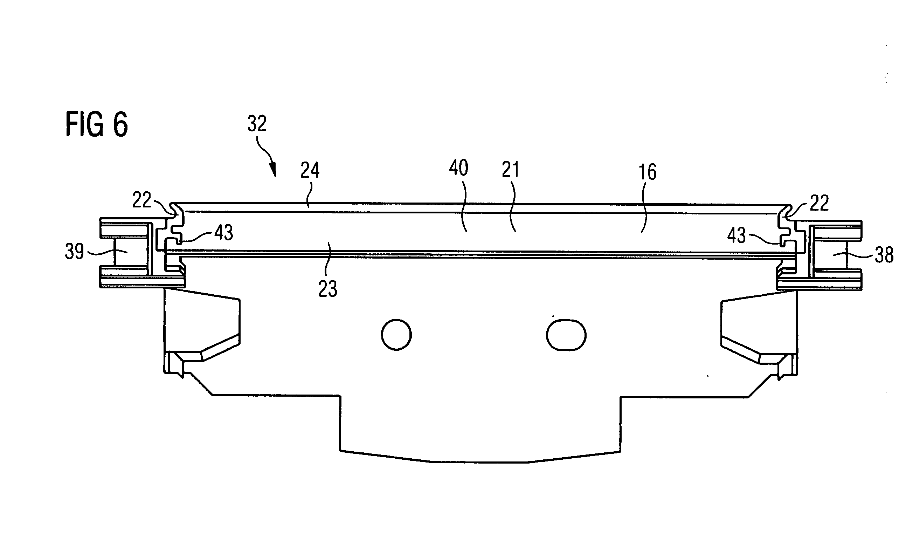

In Fig. 1 ist ein erfindungsgemäßes Verschlusselement 7 eines Verschlusses 6 mit dem Bezugszeichen 7 versehen und zusammen mit einem als Ausleger 10 ausgebildeten elastischen Element 8 bzw. einer Blattfeder 11 an einem Träger 13 dargestellt. Der Träger 13 und die Blattfeder 11 sind aus einem Blech ausgestanzt und das Verschlusselement 7 ist an das eingangsseitige Ende der Blattfeder 11 als Kunststoffteil angespritzt. Ebenfalls an dem Träger 13 angespritzt sind Rasthaken 31 für die Montage einer in Fig. 6 bis 12 dargestellten Dichteinheit 32. Näherungsweise lässt sich die Bewegung des Verschlusselements 7 des Verschlusses 6 aufgrund der geringen Amplitude als Drehung um eine in dem Bereich der Anknüpfung der Blattfeder 11 angeordneten, parallel zu einer Bewegungsebene 4 einer Karte 2 verlaufenden ersten Drehachse 20 beschreiben.

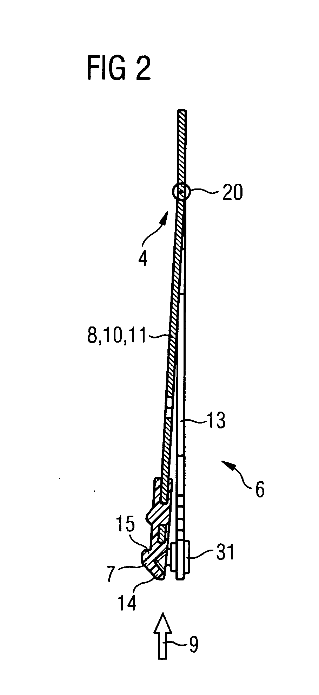

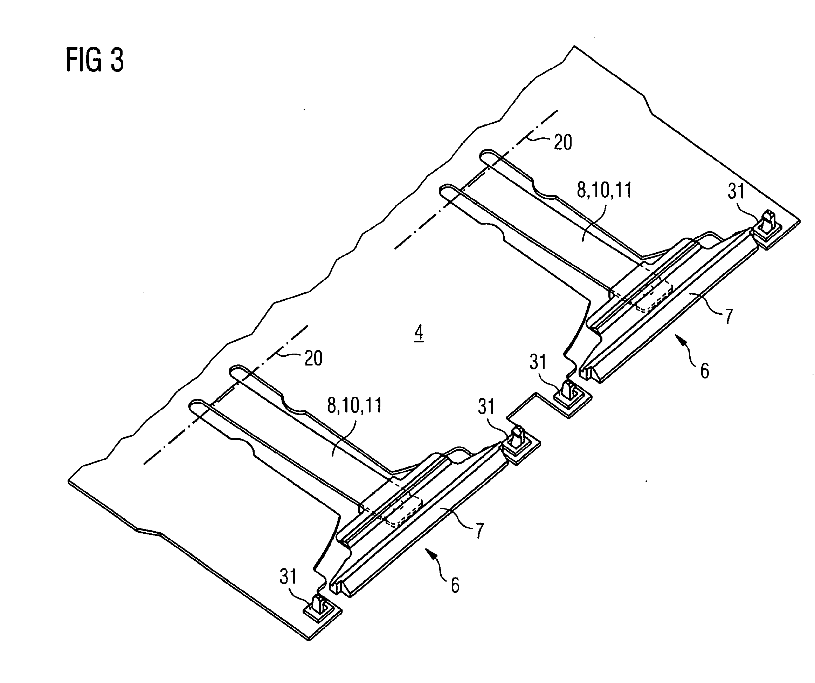

Wie auch in den Figuren 2, 3 gezeigt, weist das Verschlusselement 7 in eine Einwärtsrichtung 9 eingangsseitig eine äußere Einlaufschräge 14 auf. Mittels der äußeren Einlaufschräge 14 ist eine Karte in der Lage, das Verschlusselement 7 aus einer Aufnahmeöffnung 5 senkrecht zu der Bewegungsebene 4 der Karte 2 beiseite zu drängen. Auf der innen liegenden Seite des Verschlusselements 7 befindet sich ebenfalls eine innere Einlaufschräge 15, welche es der Karte 2 ermöglicht, das Verschlusselement 7 beim Austritt aus der Vorrichtung beiseite zu schieben. Die das Verschlusselement 7 tragende Blattfeder 11 ist etwa 6 mm versetzt zu der Ebene des Trägers 13 abgebogen in Richtung der Bewegungsebene 4 der Karte 2 und so mit einer sich bei Anlage an einem Gegenlager im Betrieb ergebenden Vorspannung versehen.

Entsprechend dem bevorzugten Einsatz von Fahrtenschreibern sind üblicherweise zwei erfindungsgemäße Verschlüsse auf einem gemeinsamen Träger 13 angeordnet, wie in Fig. 3 gezeigt.

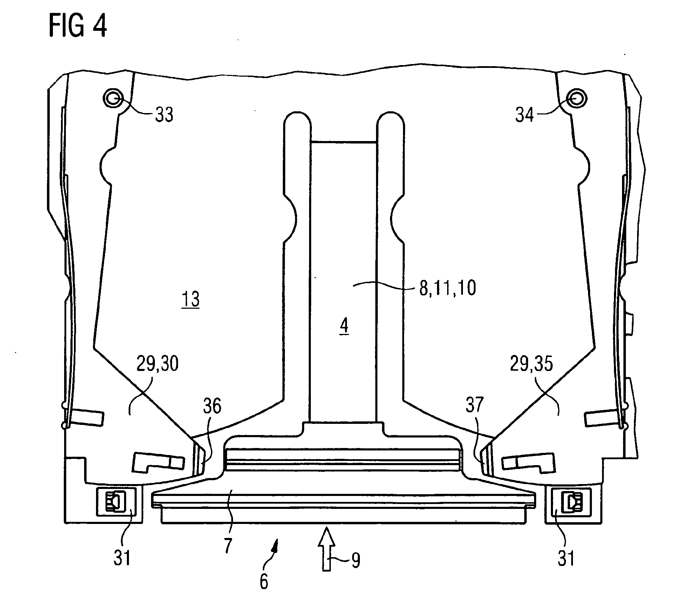

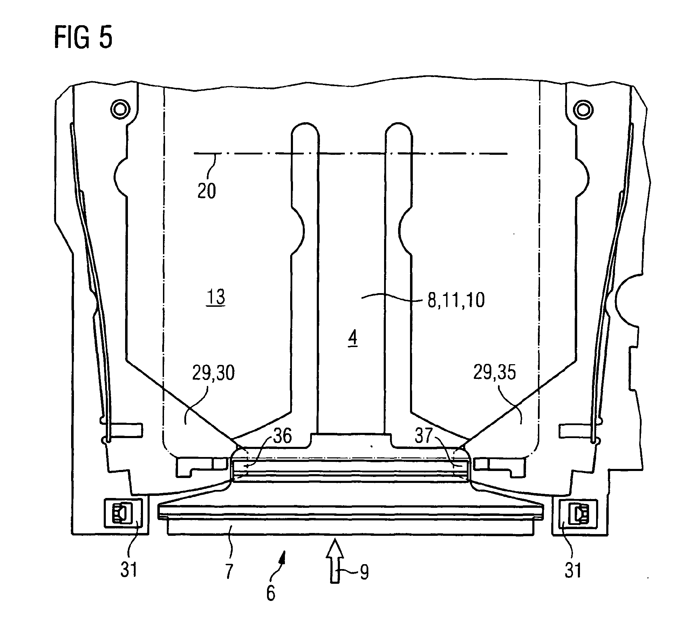

In den Figuren 4, 5 ist eine mit dem Bezugszeichen 29 versehene Verriegelungseinheit 29 dargestellt. In Fig. 4 befindet sich die Verriegelungseinheit 29 in einer nicht verriegelten Stellung und in Fig. 5 ist das Verschlusselement mittels der Verriegelungseinheit 29 verriegelt. Die Verriegelungseinheit 29 weist zwei jeweils um eine dritte Drehachse 33, 34 verschwenkbare Verriegelungselemente 30, 35 auf. Die beiden Verriegelungselemente 30, 35 sind beidseitig der Bewegungsebene 4 für eine Karte seitlich des Verschlusses 6 angeordnet. Die Verriegelungselemente 35, 30 sind an den zum Verschlusselement 7 weisenden Stirnflächen jeweils mit einer Einlaufschräge 36, 37 versehen, welche es ermöglicht, dass sich die Verriegelungselemente 30, 35 in einer Ebene zwischen der Ebene des Verschlusselements 7 und der Ebene des Trägers 13 hinter das Verschlusselement 7 schieben, so dass der Verschluss 6 nicht mehr in eine Geöffnet-Stellung zurückfedern kann.

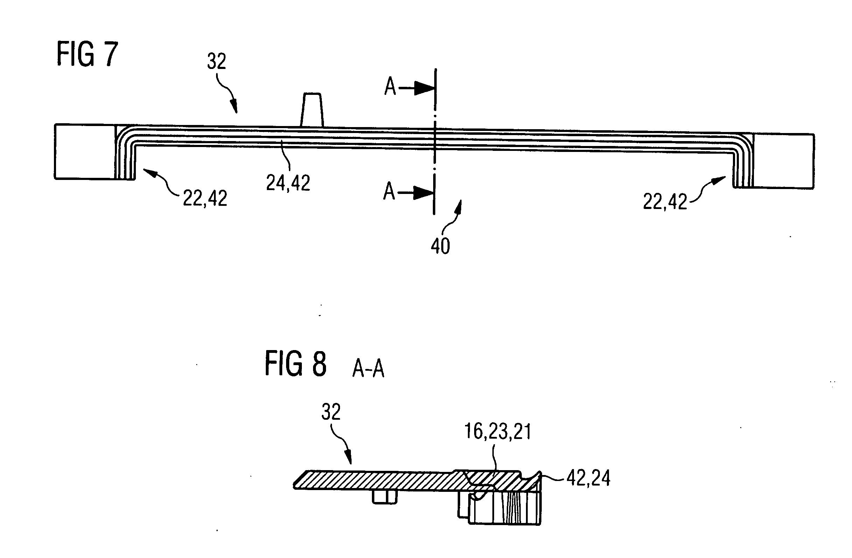

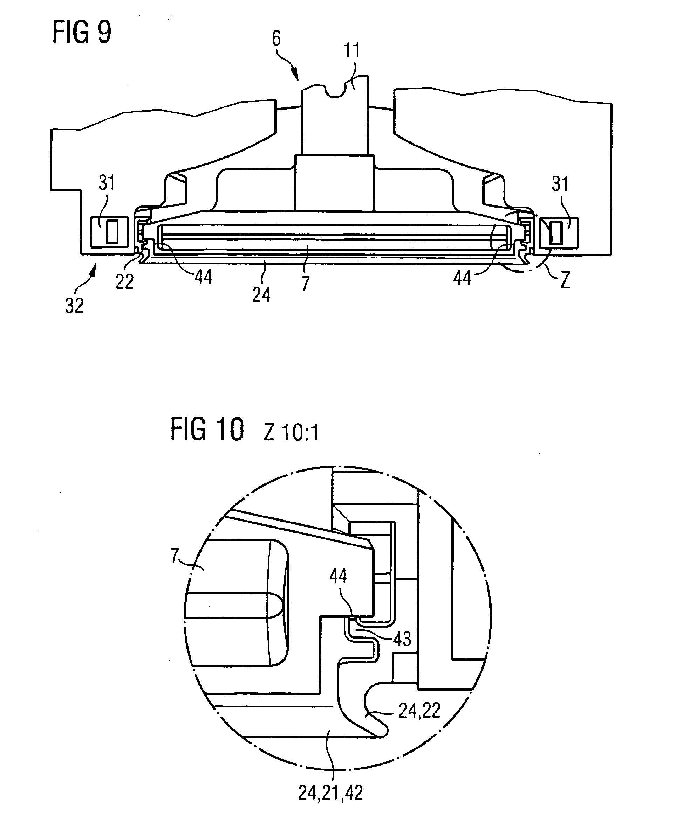

In Fig. 6 ist eine Dichteinheit 32 dargestellt, welche Dichtung ausgesparte Ausnehmungen 38, 39 aufweist, die mit den Rasthaken 31 korrespondieren. Die aus Kunststoff bestehende Dichteinheit 32 umfasst die Aufnahmeöffnung 5 für die Karte in der Bewegungsebene 4 U-förmig und ist an der der Bewegungsebene 4 zugewandten Seite mit einer Dichtung 40 versehen. Die Dichtung 40 fasst eine sich in Längsrichtung der Aufnahmeöffnung 5 erstreckende erste Dichtung 21 und zwei sich in Querrichtung der Aufnahmeöffnung 5 erstreckende zweite Dichtungen 22 einstückig zusammen. Die Dichtung 40 ist in eine entsprechende Aufnahmeausformung 41 formschlüssig in die Dichteinheit eingesetzt. Der in Fig. 8 dargestellte Querschnitt der Dichtung 40 zeigt die Anordnung mit einer ersten Dichtlippe 42 zur Abdichtung gegen eine Frontblende 25. Wie aus Fig. 9, 10 hervorgeht, weist der Bereich der zweiten Dichtung 22 eine kammerartige Aussparung mit einer federnd ausgebildeten in Einwärtsrichtung 9 weisenden zweiten Dichtlippe 43 auf. Die zweite Dichtlippe 43 dichtet gegen eine seitlich hervorstehende Dichtfläche 44 des Verschlusselements, so dass auch seitlich des Verschlusselements 7 kein Spritzwasser eindringen kann.

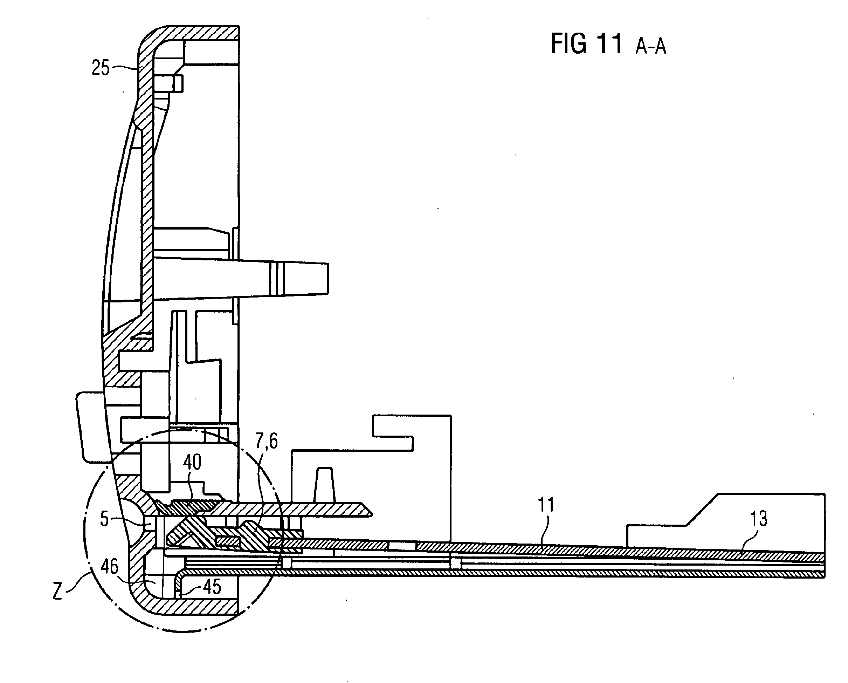

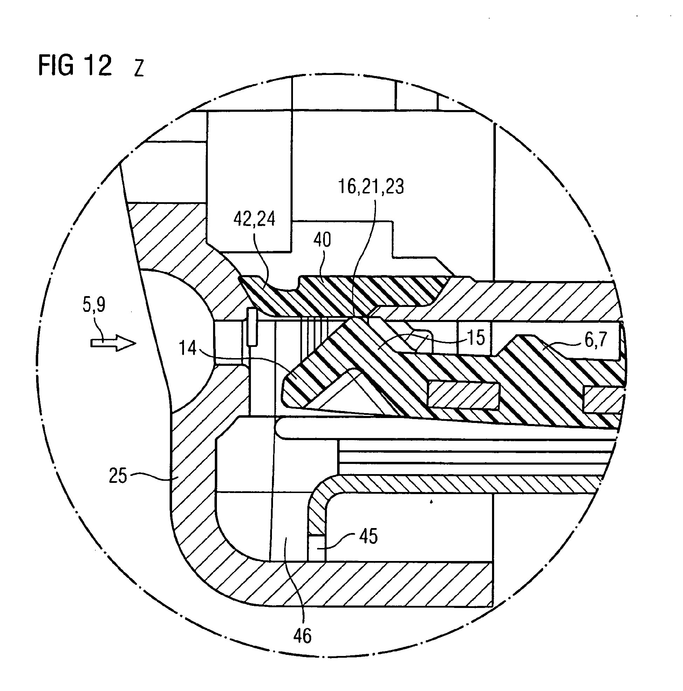

Wie den Figuren 11, 12 im Einzelnen der teilweisen Darstellung einer Kartenaufnahmevorrichtung 1 entnehmbar, schließt das Verschlusselement 7 des Verschlusses 6 bei vorschriftsmäßigem Einbau mit einer Bewegung von unten nach oben, also im Wesentlichen entgegen der Richtung der Schwerkraft und kommt in der Geschlossen-Stellung an der ersten Dichtung 21 zur Anlage. Die Einbaulage kann erfindungsgemäß auch um bis zu 30° geneigt sein. Der federnde Verschluss 7 verhindert hierbei das Herausfallen der Karte bei Auswurf mittels Klemmung. Aufgrund der Keilform des Verschlusselements 7 ist die Anlage im Wesentlichen linienhaft. Aufgrund dieser Anordnung beschreibt die Dichtung 40 um die Aufnahmeöffnung 5 eine im Wesentlichen umgekehrte U-Form. Auf diese Weise kann durch eine mit der Aufnahmeöffnung 5 korrespondiere Aufnahmeausnehmung 28 der Frontblende 25 eindringendes Spritzwasser durch die Schwerkraft getrieben in eine unter der Aufnahmeöffnung 5 hinter der Frontblende 25 auf der Rückseite 26 befindliche Entwässerungskammer 46 einlaufen und von dort aus einer Entwässerung 45 den feuchtigkeitsempfindlichen Bereich verlassen. Der gegen die Frontblende 25 dichtende Abschnitt ist als weicherer Bereich 24 der Dichtung 40 ausgebildet und ist weicher als ein angrenzender als Gegenlager des Verschlusselements angeordneter härterer Bereich 23. Diese beiden Bereiche 23, 24 sind einstückig miteinander verbunden.

## Patentansprüche

1. Kartenaufnahmevorrichtung (1), insbesondere für einen Fahrtenschreiber in einem Kraftfahrzeug in Flachbauweise, welche eine Karte (2) in einer Bewegungsebene (4) vollständig einzieht, mit einer länglichen Aufnahmeöffnung (5), durch welche die Karte (2) in die Kartenaufnahmevorrichtung (1) gelangt und mit einem Verschluss (6), der ein Verschlusselement (7) aufweist, welches sich in Längsrichtung der Aufnahmeöffnung (5) erstreckt und in der Geschlossen-Stellung des Verschlusses (6) die Aufnahmeöffnung (5) versperrt, wobei das Verschlusselement (7) im Rahmen des für die Aufnahme der Karte (2) erforderlichen Hubes in Normalenrichtung der Bewegungsebene (4) bewegbar ist, **dadurch gekennzeichnet, dass**
- das Verschlusselement (7) am eingangsseitigen Ende einer länglich ausgeführten Blattfeder (11) angebracht ist, so dass das Verschlusselement (7) im Rahmen des für die Aufnahme der Karte (2) erforderlichen Hubes in Normalenrichtung der Bewegungsebene (4) federnd gelagert ist,
- das Verschlusselement (7) eine Drehung um eine erste, in dem Bereich einer Anknüpfung der Blattfeder (11) angeordneten, parallel zur Bewegungsebene (4) verlaufende Drehachse (20) beschreibt.

2. Kartenaufnahmevorrichtung (1) nach Anspruch 1, **dadurch gekennzeichnet, dass** die Blattfeder im Wesentlichen in einer zu der Bewegungsebene (4) parallelen Ebene angeordnet ist.

3. Kartenaufnahmevorrichtung (1) nach mindestens einem der vorhergehenden Ansprüche, **dadurch gekennzeichnet, dass** das Verschlusselement (7) einstückig mit der Blattfeder (11) ausgebildet ist.

4. Kartenaufnahmevorrichtung (1) nach mindestens einem der vorhergehenden Ansprüche, **dadurch gekennzeichnet, dass** die Blattfeder (11) als Teil eines weitere Komponenten tragenden Trägers (13) ausgebildet ist.

5. Kartenaufnahmevorrichtung (1) nach mindestens einem der vorhergehenden Ansprüche, **dadurch gekennzeichnet, dass** das Verschlusselement (7) eingangsseitig eine sich in Längsrichtung der Aufnahmeöffnung (5) erstreckende außen befindliche äußere Einlaufschräge (14) für die einzuführende Karte (2) aufweist.

6. Kartenaufnahmevorrichtung (1) nach mindestens einem der vorhergehenden Ansprüche, **dadurch gekennzeichnet, dass** das Verschlusselement (7) eine sich in Längsrichtung der Aufnahmeöffnung (5) erstreckende innen befindliche innere Einlaufschräge (15) für die auszuschiebende Karte (2) aufweist.

7. Kartenaufnahmevorrichtung (1) nach mindestens einem der vorhergehenden Ansprüche, **dadurch gekennzeichnet, dass** das Verschlusselement (7) in der Geschlossen-Stellung elastisch vorgespannt an einer Gegenanlage anliegt die Karte (2) während der Einwärtsbewegung in die Kartenaufnahmevorrichtung (1) zwischen der Gegenanlage und dem Verschlusselement (7) angeordnet ist, mit einer ersten Flachseite dem Verschlusselement (7) zugewandt ist und mit einer zweiten Flachseite der Gegenanlage zugewandt ist und das Verschlusselement (7) gegen die dem Verschlusselement (7) zugewandte Flachseite der Karte (2) verspannt ist.

8. Kartenaufnahmevorrichtung (1) nach mindestens einem der vorhergehenden Ansprüche, **dadurch gekennzeichnet, dass** die Kartenaufnahmevorrichtung (1) einen Kontaktsatz zum Kontaktieren der Karte (2) aufweist, welcher auf der anderen Seite der Bewegungsebene (4) angeordnet ist, als das Verschlusselement (7).

9. Kartenaufnahmevorrichtung (1) nach mindestens einem der vorhergehenden Ansprüche, **dadurch gekennzeichnet, dass** die erste Drehachse (20) in Einwärtsrichtung mindestens um das zehnfache des üblichen Hubes des Verschlusselementes (7) von dem Verschlusselement (7) entfernt angeordnet ist.

10. Kartenaufnahmevorrichtung (1) nach mindestens einem der vorhergehenden Ansprüche, **dadurch gekennzeichnet, dass** die erste Drehachse (20) so weit von dem Verschlusselement (7) entfernt angeordnet ist, dass das Verschlusselement (7) die Aufnahmeöffnung (5) guillotineartig verschließt.

11. Kartenaufnahmevorrichtung (1) nach mindestens einem der vorhergehenden Ansprüche, **dadurch gekennzeichnet, dass** das Verschlusselement (7) in der Geschlossen-Stellung an einer sich in Längsrichtung der Aufnahmeöffnung (5) erstreckenden ersten Dichtung (21) anliegt.

12. Kartenaufnahmevorrichtung (1) nach mindestens einem der vorhergehenden Ansprüche, **dadurch gekennzeichnet, dass** das Verschlusselement (7) in der Geschlossen-Stellung an einer sich beidseitig der Aufnahmeöffnung (5) in Querrichtung der Aufnahmeöffnung (5) angeordneten zweiten Dichtung (22) anliegt.

13. Kartenaufnahmevorrichtung (1) nach mindestens einem der vorhergehenden Ansprüche, **dadurch gekennzeichnet, dass** die Kartenaufnahmevorrichtung (1) eine Frontblende (25) mit einer Rückseite (26), einer Sichtseite und mit einer Aufnahmeausnehmung (28) im Bereich der Aufnahmeöffnung (5) für die Karte (2) aufweist, der Querschnitt der Dichtung (40) einen sich in Längsrichtung erstreckenden härteren Bereich aufweist, an welchem das Verschlusselement (7) in der Geschlossen-Stellung anliegt und einen angrenzenden, sich in Längsrichtung erstreckenden weicheren Bereich, welcher an der Rückseite (26) der Frontblende (25) anliegt.

14. Kartenaufnahmevorrichtung (1) nach Anspruch 12, **dadurch gekennzeichnet, dass** die Frontblende (25) unterhalb der Aufnahmeausnehmung (28) mindestens eine Entwässerungsöffnung (45) aufweist.

15. Kartenaufnahmevorrichtung (1) nach mindestens einem der vorhergehenden Ansprüche, **dadurch gekennzeichnet, dass** das Verschlusselement (7) einen zur Dichtung (40) sich keilförmig verjüngenden Querschnitt aufweist, so dass es in der Geschlossen-Stellung zu einem im Wesentlichen linienartigen Kontakt zwischen der Dichtung (40) und dem Verschlusselement (7) kommt.

16. Kartenaufnahmevorrichtung (1) nach mindestens einem der vorhergehenden Ansprüche, **dadurch gekennzeichnet, dass** die Kartenaufnahmevorrichtung (1) eine Verriegelungseinheit (29) aufweist, welche den Verschluss (6) in der Geschlossen-Stellung verriegelt.

17. Kartenaufnahmevorrichtung (1) nach mindestens einem der vorhergehenden Ansprüche, **dadurch gekennzeichnet, dass** die Verriegelungseinheit (29) das Verschlusselement (7) zusätzlich gegen die Dichtung (40) in der Verriegelt-Stellung drückt.

18. Kartenaufnahmevorrichtung (1) nach mindestens einem der vorhergehenden Ansprüche, **dadurch gekennzeichnet, dass** die Blattfeder (11) mittels eines Verriegelungselements (30, 35) der Verriegelungseinheit (29) in der Geschlossen-Stellung des Verschlusses (6) blockierbar ist.

19. Kartenaufnahmevorrichtung (1) nach mindestens einem der vorhergehenden Ansprüche, **dadurch gekennzeichnet, dass** ein Verriegelungselement (30, 35) der Verriegelungseinheit (29) in einer im Wesentlichen zu der Karte (2) parallelen Ebene bewegbar ist.

20. Kartenaufnahmevorrichtung (1) nach mindestens einem der vorhergehenden Ansprüche, **dadurch gekennzeichnet, dass** die Karte (2) automatisch einziehbar ist.

21. Kartenaufnahmevorrichtung (1) nach mindestens einem der vorhergehenden Ansprüche, **dadurch gekennzeichnet, dass** die Karte (2) automatisch ausgebbar ist.

## Claims

1. Card receiving device (1), in particular for a tachograph in a motor vehicle of a flat construction, which completely draws in a card (2) in a plane of movement (4), with an elongate receiving opening (5), through which Card (2) reaches Card receiving device (1), and with a closure (6), which has a closure element (7), which extends in the longitudinal direction of the receiving opening (5) and blocks the receiving opening (5) in the closed position of the closure (6), the closure element (7) being movable in a direction normal to the plane of movement (4) within the travel required for the reception of Card (2), **characterized in that**
- the closure element (7) is attached to the end on the input side of a leaf spring (11) of an elongate configuration, so that the closure element (7) is resiliently mounted in a direction normal to the plane of movement (4) within the travel required for the reception of Card (2),
- the closure element (7) describes a rotation about a first axis of rotation (20) which is arranged in the region of an attachment of the leaf spring (11) and runs parallel to the plane of movement (4).

2. Card receiving device (1) according to Claim 1, **characterized in that** the leaf spring is arranged substantially in a plane parallel to the plane of movement (4).

3. Card receiving device (1) according to at least one of the preceding claims, **characterized in that** the closure element (7) is formed integrally with the leaf spring (11).

4. Card receiving device (1) according to at least one of the preceding claims, **characterized in that** the leaf spring (11) is formed as part of a carrier (13) carrying further components.

5. Card receiving device (1) according to at least one of the preceding claims, **characterized in that** the closure element (7) has on the input side an outer run-in slope (14) for Card (2) to be inserted that is located on the outside and extends in the longitudinal direction of the receiving opening (5).

6. Card receiving device (1) according to at least one of the preceding claims, **characterized in that** the closure element (7) has an inner run-in slope (15) for Card (2) to be pushed out that is located on the inside and extends in the longitudinal direction of the receiving opening (5).

7. Card receiving device (1) according to at least one of the preceding claims, **characterized in that**, in the closed position, the closure element (7) bears in an elastically prestressed manner against a counter abutment, during the inward movement into Card receiving device (1) Card (2) is arranged between the counter abutment and the closure element (7), is facing the closure element (7) with a first flat side and is facing the counter abutment with a second flat side and the closure element (7) is stressed against the flat side of Card (2) facing the closure element (7).

8. Card receiving device (1) according to at least one of the preceding claims, **characterized in that** Card receiving device (1) has a set of contacts for the contacting of Card (2) that are arranged on the other side of the plane of movement (4) than the closure element (7).

9. Card receiving device (1) according to at least one of the preceding claims, **characterized in that** the first axis of rotation (20) is arranged away from the closure element (7) in the inward direction by at least ten times the usual travel of the closure element (7).

10. Card receiving device (1) according to at least one of the preceding claims, **characterized in that** the first axis of rotation (20) is arranged so far away from the closure element (7) that the closure element (7) closes the receiving opening (5) in a manner similar to a guillotine.

11. Card receiving device (1) according to at least one of the preceding claims, **characterized in that**, in the closed position, the closure element (7) bears against a first seal (21) extending in the longitudinal direction of the receiving opening (5).

12. Card receiving device (1) according to at least one of the preceding claims, **characterized in that**, in the closed position, the closure element (7) bears against a second seal (22) arranged on both sides of the receiving opening (5) in the transverse direction of the receiving opening (5).

13. Card receiving device (1) according to at least one of the preceding claims, **characterized in that** Card receiving device (1) has a front panel (25) with a rear side (26), a visible side and with a receiving recess (28) in the region of the receiving opening (5) for Card (2), the cross section of the seal (40) has a harder region, which extends in the longitudinal direction and against which the closure element (7) bears in the closed position, and an adjacent softer region, which extends in the longitudinal direction and bears against the rear side (26) of the front panel (25).

14. Card receiving device (1) according to Claim 12, **characterized in that** the front panel (25) has underneath the receiving recess (28) at least one drainage opening (45).

15. Card receiving device (1) according to at least one of the preceding claims, **characterized in that** the closure element (7) has a cross section that tapers in the form of a wedge in relation to the seal (40), so that a substantially linear contact is obtained between the seal (40) and the closure element (7) in the closed position.

16. Card receiving device (1) according to at least one of the preceding claims, **characterized in that** Card receiving device (1) has a locking unit (29), which locks the closure (6) in the closed position.

17. Card receiving device (1) according to at least one of the preceding claims, **characterized in that** the locking unit (29) additionally presses the closure element (7) against the seal (40) in the locked position.

18. Card receiving device (1) according to at least one of the preceding claims, **characterized in that** the leaf spring (11) can be blocked in the closed position of the closure (6) by means of a locking element (30, 35) of the locking unit (29).

19. Card receiving device (1) according to at least one of the preceding claims, **characterized in that** a locking element (30, 35) of the locking unit (29) is movable in a plane substantially parallel to Card (2).

20. Card receiving device (1) according to at least one of the preceding claims, **characterized in that** Card (2) can be automatically drawn in.

21. Card receiving device (1) according to at least one of the preceding claims, **characterized in that** Card (2) can be automatically withdrawn.

## Revendications

1. Dispositif de réception de cartes à puce (1), destiné notamment à un tachygraphe du type plat dans un véhicule automobile et qui absorbe complètement une carte à puce (2) en suivant un plan de déplacement (4), comportant une ouverture d'introduction (5) allongée à travers laquelle la carte (2) parvient dans le dispositif de réception de cartes à puce (1) et un obturateur (6) comportant un élément d'obturation (7) s'étendant dans le sens longitudinal de l'ouverture d'introduction (5) et fermant, dans la position fermée de l'obturateur (6), l'ouverture d'introduction (5), où l'élément d'obturation (7) est, dans le cadre de la course nécessaire à l'introduction de la carte à puce (2), mobile dans la direction normale du plan de déplacement (4), **caractérisé par le fait que**
- l'élément d'obturation (7) est monté à l'extrémité côté entrée d'un ressort à lame (11) allongé, si bien que l'élément d'obturation (7) est, dans le cadre de la course nécessaire à l'introduction de la carte (2), suspendu d'une façon élastique dans la direction normale du plan de déplacement (4),
- l'élément d'obturation (7) décrit une rotation autour d'un premier axe de rotation (20) disposé dans la zone de rattachement du ressort à lame (11) et s'étendant parallèlement au plan de déplacement (4).

2. Dispositif de réception de cartes à puce (1) selon la revendication 1, **caractérisé par le fait que** le ressort à lame est disposé, pour l'essentiel, dans un plan parallèle au plan de déplacement (4).

3. Dispositif de réception de cartes à puce (1) selon au moins l'une des revendications précédentes, **caractérisé** p a r le fait que l'élément d'obturation (7) est conçu en une seule pièce avec le ressort à lame (11).

4. Dispositif de réception de cartes à puce (1) selon au moins l'une des revendications précédentes, **caractérisé** p a r le fait que le ressort à lame (11) est conçu comme partie d'un support (13) portant d'autres constituants.

5. Dispositif de réception de cartes à puce (1) selon au moins l'une des revendications précédentes, **caractérisé** p a r le fait que l'élément d'obturation (7) comporte, du côté entrée, pour la carte à introduire (2), un biseau extérieur d'introduction (14) s'étendant dans le sens longitudinal de l'ouverture d'introduction (5) et se trouvant à l'extérieur.

6. Dispositif de réception de cartes à puce (1) selon au moins l'une des revendications précédentes, **caractérisé par le fait que** l'élément d'obturation (7) comporte, pour la carte à introduire (2), un biseau intérieur d'introduction (15) s'étendant dans le sens longitudinal de l'ouverture d'introduction (5) et se trouvant à l'intérieur.

7. Dispositif de réception de cartes à puce (1) selon au moins l'une des revendications précédentes, **caractérisé par le fait que** l'élément d'obturation (7), dans la position fermée, est appliqué, d'une façon élastique et sous une force de précontrainte, contre un appui correspondant, que la carte à puce (2) est disposée, pendant le mouvement d'entrée dans le dispositif de réception de cartes à puce (1), entre l'appui correspondant et l'élément d'obturation (7), qu'elle est tournée, par une première face plane, vers l'élément d'obturation (7) et, par une deuxième face plane, vers l'appui correspondant et que l'élément d'obturation (7) appuie contre la face plane de la carte (2) tournée vers l'élément d'obturation (7).

8. Dispositif de réception de cartes à puce (1) selon au moins l'une des revendications précédentes, **caractérisé par le fait que** le dispositif de réception de cartes à puce (1) comporte un jeu de contacts, destiné à établir le contact électrique avec la carte à puce (2), qui est disposé sur l'autre côté du plan de déplacement (4) par rapport à l'élément d'obturation (7).

9. Dispositif de réception de cartes à puce (1) selon au moins l'une des revendications précédentes, **caractérisé par le fait que** le premier axe de rotation (20) est disposé, dans le sens allant vers l'intérieur, à une distance de l'élément d'obturation (7) au moins égale à dix fois la course habituelle de l'élément d'obturation (7).

10. Dispositif de réception de cartes à puce (1) selon au moins l'une des revendications précédentes, **caractérisé par le fait que** le premier axe de rotation (20) est disposé suffisamment loin de l'élément d'obturation (7) pour que l'élément d'obturation (7) ferme l'ouverture d'introduction (5) à la manière d'une guillotine.

11. Dispositif de réception de cartes à puce (1) selon au moins l'une des revendications précédentes, **caractérisé par le fait que** l'élément d'obturation (7), dans la position fermée, est appliqué sur un premier joint (21) s'étendant dans le sens longitudinal de l'ouverture d'introduction (5).

12. Dispositif de réception de cartes à puce (1) selon au moins l'une des revendications précédentes, **caractérisé par le fait que** l'élément d'obturation (7), dans la position fermée, est appliqué sur un deuxième joint (22) disposé des deux côtés de l'ouverture d'introduction (5) dans le sens perpendiculaire à l'ouverture d'introduction (5).

13. Dispositif de réception de cartes à puce (1) selon au moins l'une des revendications précédentes, **caractérisé par le fait que** le dispositif de réception de cartes à puce (1) comporte un cache avant (25) avec une face arrière (26), une face visible et un évidement d'introduction (28) dans la zone de l'ouverture d'introduction (5) de la carte (2), la section transversale du joint (40) comporte une partie plus dure s'étendant dans la direction longitudinale, sur laquelle l'élément d'obturation (7) s'appuie, dans la position fermée, et une partie voisine plus molle, s'étendant dans le sens longitudinal, qui s'applique sur la face arrière (26) du cache avant (25).

14. Dispositif de réception de cartes à puce (1) selon la revendication 12, **caractérisé par le fait que** le cache avant (25) comporte au moins une ouverture de drainage (45) au-dessous de l'évidement d'introduction (28).

15. Dispositif de réception de cartes à puce (1) selon au moins l'une des revendications précédentes, **caractérisé par le fait que** l'élément d'obturation (7) a une section transversale s'amincissant en forme de cône en allant vers le joint (40), si bien que, dans la position fermée, il se produit un contact, pour l'essentiel, linéaire entre le joint (40) et l'élément d'obturation (7).

16. Dispositif de réception de cartes à puce (1) selon au moins l'une des revendications précédentes, **caractérisé par le fait que** le dispositif de réception de cartes à puce (1) comporte une unité de verrouillage (29) qui verrouille l'obturateur (6) dans la position fermée.

17. Dispositif de réception de cartes à puce (1) selon au moins l'une des revendications précédentes, **caractérisé par le fait que** l'unité de verrouillage (29) appuie, dans la position verrouillée, en supplément sur le joint (40) .

18. Dispositif de réception de cartes à puce (1) selon au moins l'une des revendications précédentes, **caractérisé par le fait que** le ressort à lame (11) peut, dans la position fermée de l'obturateur (6), être bloqué au moyen d'un élément de verrouillage (30, 35) de l'unité de verrouillage (29).

19. Dispositif de réception de cartes à puce (1) selon au moins l'une des revendications précédentes, **caractérisé par le fait qu'**un élément de verrouillage (30, 35) de l'unité de verrouillage (29) est mobile dans un plan, pour l'essentiel, parallèle à la carte à puce (2).

20. Dispositif de réception de cartes à puce (1) selon au moins l'une des revendications précédentes, **caractérisé par le fait que** la carte à puce (2) est introduite automatiquement.

21. Dispositif de réception de cartes à puce (1) selon au moins l'une des revendications précédentes, **caractérisé par le fait que** la carte à puce (2) est restituée automatiquement.
